# EUROPÄISCHE PATENTSCHRIFT

(11) **EP 2 279 884 B1**
(45) Veröffentlichungstag und Bekanntmachung des Hinweises auf die Patenterteilung: **28.09.2016**
(21) Anmeldenummer: 09290597.5
(22) Anmeldetag: 29.07.2009
(51) Int. Cl.: B60H 1/00

(54) **Kraftfahrzeugklimaanlage**
Motor vehicle air conditioning
Climatisation de véhicule automobile

(43) Veröffentlichungstag der Anmeldung: 02.02.2011
(73) Patentinhaber: Mahle Behr France Rouffach S.A.S, 68250 Rouffach (FR)
(72) Erfinder: Luttringer, Christophe, 68700 Steinbach (FR); Bermann, Sébastien, 67000 Strasbourg (FR)
(74) Vertreter: Grauel, Andreas

(56) Entgegenhaltungen:
- EP-A- 0 411 399
- EP-A- 1 471 314
- EP-B- 1 621 375
- DE-A1- 19 750 509
- DE-B4- 10 031 991
- US-A1- 2008 176 502

## Beschreibung

Die Erfindung betrifft eine Kraftfahrzeugklimaanlage gemäß dem Oberbegriff des Anspruches 1.

Kraftfahrzeugklimaanlagen dienen dazu, die dem Innenraum eines Kraftfahrzeuges zuzuführende Luft zu erwärmen und/oder zu kühlen. Eine Kraftfahrzeugklimaanlage umfasst einen Kältemittelverdampfer, einen Kondensator und einen Verdichter. Der Kältemittelverdampfer, der Kondensator und der Verdichter sind mittels Leitungen zu einem Kältemittelkreislauf verbunden. Der Kältemittelverdampfer ist in einem Gehäuse der Kraftfahrzeugklimaanlage angeordnet und dient dazu, die dem Innenraum des Kraftfahrzeuges zuzuführende Luft zu kühlen.

Kraftfahrzeugklimaanlagen weisen Luftkanäle zum Durchleiten der Luft auf. Dabei sind in den Luftkanälen Luftklappen als Luftsteuerorgane angeordnet, um die durch den Luftkanal geleitete Luftmenge zu steuern. Die Luftklappe wird dabei von einem Aktuator, z. B. einem Elektromotor bewegt und die mechanische Verbindung zwischen dem Aktuator und der Luftklappe wird dabei mit einem mechanischen System hergestellt. Auf die Luftklappen wirken neben der von dem Aktuator erzeugten Kraft zum kontrollierten Bewegen der Luftklappen noch weitere Kräfte. Die durch den Luftkanal geleitete Luft bringt dabei auf die Luftklappen eine Kraft auf. Auch Beschleunigungen der Kraftfahrzeugklimaanlage, die beispielsweise aus einer von einem Verbrennungsmotor übertragene Vibration auf die Kraftfahrzeugklimaanlage oder beim Fahren über unebene Straßen mit dem Kraftfahrzeug resultieren, führen zu Schwingungen und/oder unkontrollierten Bewegungen der Luftklappen. Diese Schwingungen bzw. Vibrationen der Luftklappen erhöhen den von der Kraftfahrzeugklimaanlage abgegebenen Geräuschpegel. Außerdem können diese unkontrollierten Bewegungen auch Schäden en der Luftklappe, insbesondere an einer Lagerung der Luftklappe, hervorrufen.

Die EP 1 621 375 B1 zeigt eine Luftklappenanordnung für eine Kraftfahrzeugklimaanlage. Eine in einem Gehäuse angeordnete und um eine Schwenkachse verschwenkbare Luftklappe weist einen festen Klappenbereich und einen elastischen Dichtungsbereich auf. Am Klappenbereich ist zumindest funktional unabhängig vom Dichtungsbereich ein in Bewegungsrichtung vorgesehener Anschlag angeordnet, der mit einem am Gehäuse vorgesehenen Klappenanschlag derart zusammenwirkt, dass in einer Winkelstellung vor dem vollständigen Schließen der Luftklappe ein Kontakt zwischen dem Anschlag und dem Klappenanschlag besteht, bevor der beabstandet vom Anschlag ausgebildete Dichtungsbereich in Anlage an das Gehäuse geht. Der Anschlag am Klappenbereich ist dabei elastisch ausgebildet. In nachteiliger Weise können somit an der Luftklappe Schwingungen und/oder unkontrollierte Bewegungen, beispielsweise verursacht durch eine Luftströmung, auftreten.

Die DE 100 31 991 B4 zeigt eine Luftklappe für eine Klimaanlage. Zwei über einen gemeinsamen Mündungsbereich verfügende Kanäle umfassen einen Bereich, der eine dichtende Trennung eines Teils des Mündungsbereiches bei jeder Position einer Luftklappe ermöglicht, wobei der Bereich kleiner als die Fläche der Luftklappe ist. Damit kann in nachteiliger Weise bei Luftströmungen oder Beschleunigungen der Klimaanlage an der Luftklappe eine unkontrollierte Bewegung oder eine Schwingung auftreten mit einer nachteiligen Geräuschentwicklung.

US 2008176502 zeigt eine Klimaanlage gemäß dem Oberbegriff des Anspruchs 1.

Die Aufgabe der vorliegenden Erfindung besteht deshalb darin, eine Kraftfahrzeugklimaanlage zur Verfügung zu stellen, bei der Schwingungen oder unkontrollierte Bewegungen der Luftklappen verhindert oder ausgeschlossen werden können, um die Geräuschentwicklung der Kraftfahrzeugklimaanlage zu verringern.

Diese Aufgabe wird gelöst mit einer Kraftfahrzeugklimaanlage, mit den Merkmalen des Anspruchs 1. Geräuschentwicklung der Kraftfahrzeugklimaanlage wird somit wesentlich verringert.

Insbesondere stellen das wenigstens eine Luftsteuerorgan und vorzugsweise das mechanische System den Bewegungsteil der Kraftfahrzeugklimaanlage dar und vorzugsweise ist das wenigstens eine Reibelement zwischen dem Bewegungsteil und dem feststehenden Teil der Kraftfahrzeugklimaanlage angeordnet.

In einer Variante umfasst das Bewegungsteil das wenigstens eine Reibelement, falls das wenigstens eine Reibelement an dem Luftsteuerorgan oder an dem mechanischen System angeordnet ist.

In einer weiteren Ausgestaltung ist das wenigstens eine Reibelement an dem mechanischen System und/oder dem wenigstens einen Luftsteuerorgan, insbesondere einer Achse oder Welle des wenigstens einen Luftsteuerorganes, angeordnet, so dass das wenigstens eine Reibelement Bewegungen des mechanischen Systems und/oder des wenigstens einen Luftsteuerorganes mit ausführt und/oder das wenigstens eine Reibelement ist an dem feststehenden Teil der Kraftfahrzeugklimaanlage angeordnet. Das wenigstens eine Reibelement kann die Schwingungen und/oder unkontrollierten Bewegungen des wenigstens einen Luftsteuerorganes bei einer Anordnung an dem mechanischen System verhindern, weil das mechanische System mit dem wenigsten einen Luftsteuerorgan mechanisch verbunden ist.

In eine ergänzenden Ausführungsform ist die Reibungskraft zur Verhinderung oder Reduzierung von Schwingungen und/oder unkontrollierten Bewegungen des wenigstens einen Luftsteuerorganes erzeugbar aufgrund einer Relativbewegung zwischen dem sich mit bewegenden wenigstens einen Reibelement und dem feststehenden Teil der Kraftfahrzeugklimaanlage und/oder die Reibungskraft zur Verhinderung oder Reduzierung von Schwingungen und/oder unkontrollierten Bewegungen des wenigstens einen Luftsteuerorganes ist erzeugbar aufgrund einer Relativbewegung zwischen dem feststehenden wenigstens einen Reibelement und dem sich bewegenden wenigstens einen Luftsteuerorgan und vorzugsweise dem sich bewegenden mechanischen System der Kraftfahrzeugklimaanlage.

Vorzugsweise ist das wenigstens eine Reibelement elastisch und/oder das wenigstens eine Reibelement dient ausschließlich dazu, Schwingungen und/oder unkontrollierte Bewegungen des wenigstens einen Luftsteuerorganes mittels Reibungskraft zu verhindern oder zu reduzieren. Aufgrund einer elastischen Verformung des wenigstens einen Reibelementes bringt das wenigstens eine Reibelement beispielsweise auf den feststehenden Teil der Kraftfahrzeugklimaanlage eine im Wesentlichen konstante Kraft auf, so dass bei einer Relativbewegung zwischen dem wenigstens einen Reibelement und dem feststehenden Teil der Kraftfahrzeugklimaanlage eine im Wesentlichen konstante Reibungskraft zur Verhinderung oder Reduzierung der Schwingungen und/oder unkontrollierten Bewegungen des wenigstens einen Luftsteuerorganes zur Verfügung steht. Ist das wenigstens eine Reibelement beispielsweise in einem Spalt zwischen einem feststehenden Teil der Kraftfahrzeugklimaanlage und einem Bewegungsteil der Kraftfahrzeugklimaanlage angeordnet, können bei der Fertigung Abweichungen in der Größe dieses Spaltes auftreten. Ein elastisches Reibelement hat dabei den Vorteil, dass geringfügige Abweichungen in der Größe dieses Spaltes ausgeglichen werden können und trotzdem eine im Wesentlichen konstante Reibungskraft zur Verfügung gestellt werden kann.

Vorteilhafterweise kann die Geometrie des Reibelements, Gehäuses und/oder des wenigstens einen Luftsteuerorgans auch so ausgebildet sein, dass sich über den Bewegungsverlauf des Luftsteuerorgans eine veränderliche Reibungskraft ergibt. Diese könnte beispielsweise zu- oder abnehmend über einen bestimmten Bereich des Bewegungsverlaufs sein.

Das wenigstens eine Reibelement besteht wenigstens teilweise, insbesondere vollständig, aus Gummi und/oder Schaumstoff.

Zweckmäßig weist das wenigstens eine Reibelement eine konvexe Oberfläche auf. Weiter bevorzugt ist das Reibelement profiliert, beispielsweise als Hohlprofil, offenes Hohlprofil und/oder lippenförmig ausgebildet.

In einer weiteren Ausführungsform ist an der konvexen Oberfläche des wenigstens einen Reibelementes die Relativbewegung zur Erzeugung der Reibungskraft ausführbar. Eine konvexe Oberfläche hat den Vorteil, dass die Kontaktfläche zwischen dem Reibelement und einem übrigen Teil der Kraftfahrzeugklimaanlage, insbesondere einem feststehenden oder einem Bewegungsteil der Kraftfahrzeugklimaanlage, zur Erzeugung der Reibungskraft gering ist, so dass dadurch das Risiko eines Festklemmens des wenigstens einen Luftsteuerorgans im Wesentlichen ausgeschlossen werden kann.

Insbesondere umfasst der feststehende Teil der Kraftfahrzeugklimaanlage ein Gehäuse und/oder eine Wandung und/oder eine Lagerung, insbesondere eine Gleitlagerung, für das mechanische System und/oder ist das wenigstens eine Luftsteuerorgan eine Luftklappe oder ein Schirm oder ein Rollband und/oder das wenigstens eine mechanische System umfasst eine Welle und/oder einen Hebel und/oder einen Kurbeltrieb und/oder einen Spindeltrieb und/oder ein Getriebe und/oder der Aktuator ist ein Elektromotor oder ein Aktuator mit einer Formgedächtnislegierung oder ein Piezoaktuator.

Zweckmäßig umfasst der feststehende Teil der Kraftfahrzeugklimaanlage das wenigstens eine Reibelement, falls das wenigstens eine Reibelement beispielweise an dem Gehäuse und/oder der Lagerung angeordnet ist

In eine weiteren Ausführungsform ist das wenigstens eine Reibelement elastisch verformt in der Kraftfahrzeugklimaanlage angeordnet und/oder von dem wenigstens einen Reibelement ist eine Druckkraft auf den übrigen Teil der Kraftfahrzeugkilmaanlage aufbringbar, insbesondere zur Erzeugung einer Gleitreibung zwischen dem wenigstens einen Reibelement und dem übrigen Teil der Kraftfahrzeugklimaanlage.

Erfindungsgemäßes Verfahren zum Betreiben einer Kraftfahrzeugklimaanlage, insbesondere einer in dieser Schutzrechtsanmeldung beschriebenen Kraftfahrzeugklimaanlage, mit den Schritten: Aufbringen einer Kraft auf wenigstens ein Luftsteuerorgan, so dass das wenigstens eine Luftsteuerorgan eine Schwingung und/oder eine unkontrollierte Bewegung ausführt, wobei vorzugsweise die Kraft für die Schwingung und/oder unkontrollierte Bewegung nicht von einem Aktuator zum Bewegen des wenigstens einen Luftsteuerorganes erzeugt wird, wobei die Schwingung und/oder unkontrollierte Bewegung des wenigstens einen Luftsteuerorganes von wenigstens einem Reibelement verhindert oder reduziert wird.

Zweckmäßig wird von dem wenigstens einen Reibelement ausschließlich eine Reibungskraft zur Verhinderung oder Reduzierung der Schwingungen und/oder unkontrollierten Bewegungen der wenigstens einen Luftklappe erzeugt. Das Reibelement dient damit keinem andern Zweck oder hat keine andere Aufgabe in der Kraftfahrzeugklimaanlage.

In einer weiteren Ausgestaltung wird die Kraft für die Schwingung und/oder unkontrollierte Bewegung von durch einen Luftkanal strömender Luft auf das wenigstens eine Luftsteuerorgan aufgebracht und/oder resultiert aus einer auf die Kraftfahrzeugklimaanlage wirkenden Beschleunigung.

In einer ergänzenden Variante resultiert die Beschleunigung der Kraftfahrzeugklimaanlage aus einer Vibration eines Verbrennungsmotors und/oder einem Fahren eines Kraftfahrzeuges auf einem unebenen Untergrund.

In einer weiteren Variante erzeugt das wenigstens eine Reibelement eine der Bewegung des wenigstens einen Luftsteuerorganes entgegenwirkenden Reibungskraft.

In einer weiteren Ausgestaltung resultiert die Reibungskraft, insbesondere ausschließlich, aus einer Gleitreibung aufgrund einer Relativbewegung zwischen dem wenigstens einem Reibelement und einem übrigen Teil, vorzugsweise einem feststehenden Teil oder einem Bewegungsteil, der Kraftfahrzeugklimaanlage.

In einer zusätzlichen Ausgestaltung führt das wenigstens eine Reibelement Bewegungen des wenigstens einen Luftsteuerorganes und/oder eines mechanischen Systems zur mechanischen Verbindung wenigstens eines Aktuators mit dem wenigstens einen Luftsteuerorgan mit aus.

Zweckmäßig umfasst die Kraftfahrzeugklimaanlage einen Verdampfer, vorzugsweise einen Kondensator, einen Verdichter und Leitungen für einen Kältemittelkreislauf.

In einer zusätzlichen Ausgestaltung umfasst die Kraftfahrzeugklimaanlage ein Gebläse und/oder eine Steuerungseinheit und/oder einen Filter.

Im Nachfolgenden werden Ausführungsbeispiele der Erfindung unter Bezugnahme auf die beigefügten Zeichnungen näher beschrieben. Es zeigt:
- Fig. 1: einen stark vereinfachten Schnitt einer Kraftfahrzeugklimaanlage,
- Fig. 2: eine Ansicht einer Luftklappe,
- Fig. 3: einen vertikalen Schnitt A-A der Luftklappe gemäß Fig. 2 in einem Gehäuse und
- Fig. 4: eine perspektivische Teilansicht der Luftklappe gemäß Fig. 2.

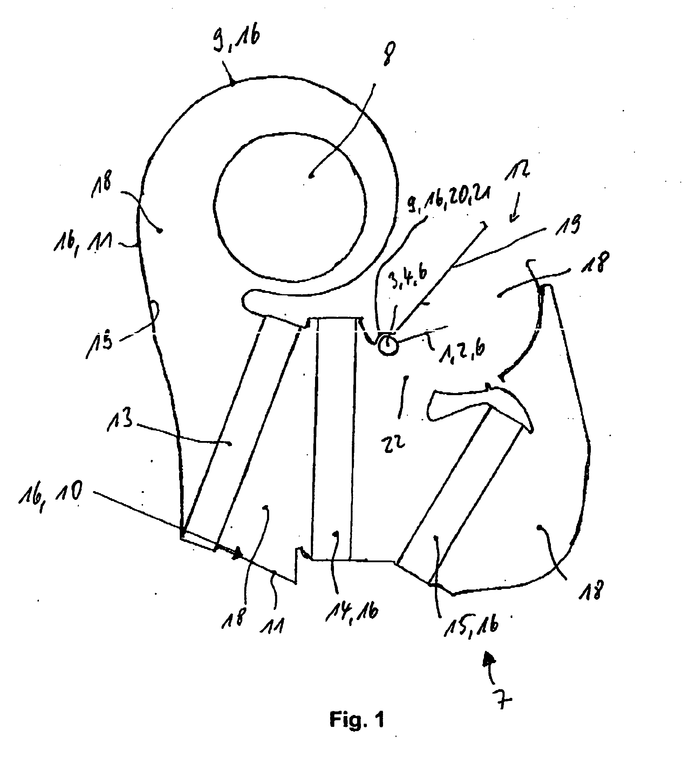

Fig. 1 zeigt eine Kraftfahrzeugklimaanlage 7. In einem Gehäuse 9 mit einer Bodenwandung 10 und einer Austrittsöffnung 12 ist ein Gebläse 8, ein Filter 13, ein Kältemittelverdampfer 14 und eine elektrische Heizeinrichtung 15 angeordnet. Das Gehäuse 9 bildet somit einen Luftkanal 18 zum Durchleiten der Luft. Wandungen 11 des Gehäuses 9 weisen an der Innenseite eine Oberfläche 19 auf, welche den Luftkanal 18 begrenzen. Die Luft für den Innenraum eines Kraftfahrzeuges wird mittels des Gebläses 8 durch den Filter 13, den Kältemittelverdampfer 14 sowie die elektrische Heizeinrichtung 15 geleitet.

Die Kraftfahrzeugklimaanlage 7 umfasst außerdem ein als Luftklappe 2 ausgebildetes Luftsteuerorgan 1 (Fig. 1 bis 4). An der Luftklappe 2 ist eine Achse 3 bzw. eine Welle 4 ausgebildet. Die Luftklappe 2 ist dabei um die Achse 3 verschwenkbar, so dass dadurch die Menge an Luft, welche durch die elektrische Heizeinrichtung 15 geleitet wird, gesteuert und/oder geregelt werden kann. Die Kraftfahrzeugklimaanlage 7 weist eine Steueröffnung 22 auf (Fig. 1). Wird von der Luftklappe 2 die Steueröffnung 22 vollständig verschlossen, strömt die gesamte aus der Austrittsöffnung 12 ausströmende Luft durch die elektrische Heizeinrichtung 15. Ist die Steueröffnung 22 aufgrund einer entsprechenden Stellung der Luftklappe 2 vollständig geöffnet, strömt die aus der Austrittsöffnung 12 ausströmende Luft sowohl durch die elektrische Heizeinrichtung 15 als auch nicht durch die elektrische Heizeinrichtung 15. In Fig. 1 ist die Luftklappe 2 in einer geringfügig geschlossenen Stellung dargestellt. Die Luftklappe 2 wird dabei von einem nicht dargestellten Elektromotor als Aktuator zwischen den verschiedenen Stellungen bewegt. Der Elektromotor ist dabei mittels eines mechanischen Systems mit der Luftklappe 2, d. h. der Welle 4 verbunden. Das mechanische System (nicht dargestellt) umfasst beispielsweise einen Hebel, eine Welle und ein Getriebe.

Während des Durchleitens von Luft durch den Luftkanal 18, insbesondere beim Durchleiten durch die Steueröffnung 22, wirken aufgrund der Strömung der Luft auf die Luftklappe 2 Kräfte. Die Kraftfahrzeugklimaanlage 7 ist in einem Kraftfahrzeug (nicht dargestellt) angeordnet. Bei einer Fahrt des Kraftfahrzeuges werden von einem Verbrennungsmotor des Kraftfahrzeuges Vibrationen bzw. Schwingungsbewegungen erzeugt, die teilweise auf die Kraftfahrzeugklimaanlage 7 übertragen werden. Diese als Vibrationen wirkenden Schwingungen führen zu Beschleunigungen der Kraftfahrzeugklimaanlage 7, die auch auf die Luftklappe 2 wirken. Aufgrund des physikalischen Gesetzes, dass die Kraft = Masse * Beschleunigung ist, treten auch damit an der Luftklappe 2 Kräfte auf. Auch ein Fahren auf einer unebenen Fahrbahn mit dem Kraftfahrzeug können zu Beschleunigungen in der Kraftfahrzeugklimaanlage 7 führen. Damit treten an der Luftklappe 2 neben im kontrollierten Bewegen zur Steuerung der durch die Steueröffnung 22 geleiteten Luft aufgrund von Bewegungen mittels des Aktuators an der Luftklappe 2 auch Schwingungen und unkontrollierte Bewegungen auf, die nicht beabsichtigt sind.

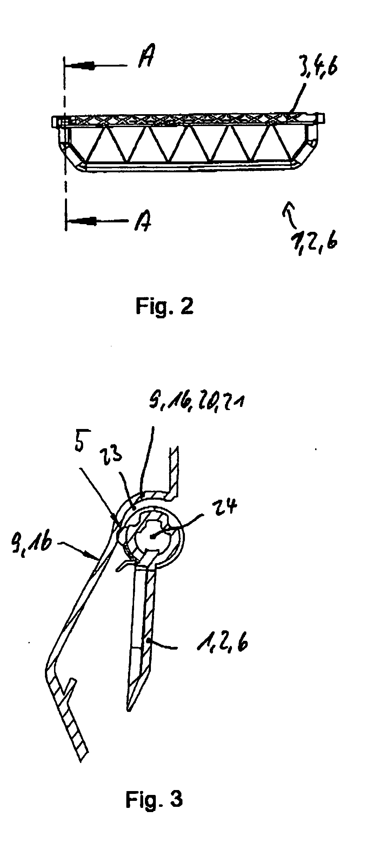

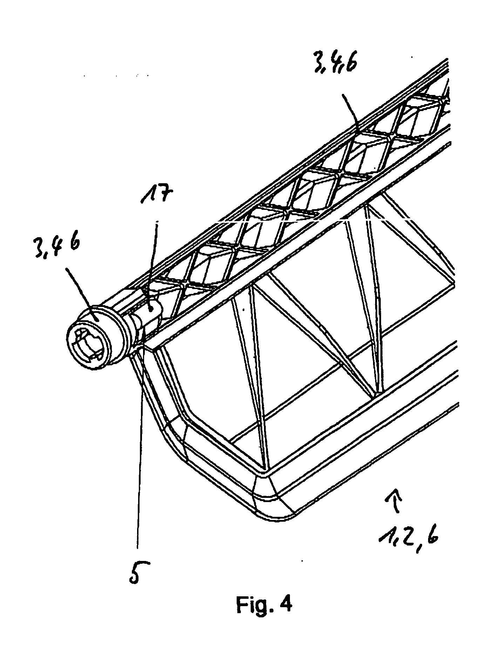

Diese nicht beabsichtigten Schwingungen und/oder unkontrollierten Bewegungen der Luftklappe 2 werden von einem elastischen Reibelement 5 im Wesentlichen verhindert Das Reibelement 5 (Fig. 3 und 4) ist dabei an der Welle 4 der Luftklappe 2 ausgebildet. Das Gehäuse 9 der Kraftfahrzeugklimaanlage 7 bildet in einem Teilabschnitt einer als Gleitlagerung 21 ausgebildete Lagerung 20 für die Achse 3 bzw. Welle 4 der Luftklappe 2. Das Gehäuse 9, insbesondere die Lagerung 20, stellt somit einen feststehenden Teil 16 der Kraftfahrzeugklimaanlage 7 dar. Die Luftklappe 2 sowie das nicht dargestellte mechanische System stellen dabei einen Bewegungsteil 6 der Kraftfahrzeugklimaanlage dar. Zwischen dem feststehenden Teil 16 und dem Bewegungsteil 6 der Kraftfahrzeugklimaanlage 7 ist ein Spalt 23 vorhanden. In diesem Spalt ist aufgrund der konstruktiven Ausbildung des Reibelementes 5 an der Welle 4 das elastische Reibelement 5 aus Gummi angeordnet. Das Reibelement 5 ist dabei in seiner Ausdehnung radial zu einer Rotationsachse 24 der Luftklappe 2 geringfügig größer als die radiale Ausdehnung des Spaltes 23, so dass aufgrund einer elastischen Verformung von dem Reibelement 5 auf den feststehenden Teil 16 der Kraftfahrzeugklimaanlage, d. h. die Gleitlagerung 21 (Fig. 3), eine entsprechende Druckkraft ausgeübt wird. Diese Druckkraft führt bei einer Bewegung der Luftklappe 2 und damit auch des Reibelementes 5 zu einer Reibungskraft wegen Gleitreibung, welche den Schwingungen und/oder unkontrollierten Bewegungen der Luftklappe 2 entgegenwirkt. Das Reibelement 5 und die Luftklappe 2 führen dabei eine Rotationsbewegung um die Rotationsachse 24 aus, wobei die Rotationsachse 24 senkrecht auf der Zeichenebene von Fig. 3 steht.

Damit treten in vorteilhafter Weise diese Schwingungen oder unkontrollierten Bewegungen der Luftklappe 2 in der Kraftfahrzeugklimaanlage 7 nicht auf. Dabei ist die von dem Reibelement 5 erzeugte Reibungskraft bei einer Bewegung der Luftklappe 2 von einer derartigen Größe, dass einerseits effektiv die Schwingungen und unkontrollierten Bewegungen der Luftklappe 2, z. B. aufgrund der Luftströmung in der Steueröffnung 22, verhindert werden können und andererseits die kontrollierten Bewegungen der Luftklappe 2 zur Steuerung der durch die Steueröffnung 22 geleiteten Luft mittels einer von dem Aktuator auf die Luftklappe 2 aufgebrachten Kraft im Wesentlichen nicht behindert werden. Die konvexe Oberfläche 17 des Reibelementes 5 hat außerdem den Vorteil, dass es bei Bewegungen der Luftklappe 2 nicht zu Verklemmungen zwischen dem Reibelement 5 und der Gleitlagerung 21 kommen kann, so dass dadurch ein sicheres und zuverlässiges kontrolliertes Bewegen der Luftklappe 2 mittels des nicht dargestellten Aktuators möglich ist.

In einem zweiten, nicht dargestellten Ausführungsbeispiel ist das Reibelement 5 nicht an der Luftklappe 2, d. h. der Welle 4, sondern an der Gleitlagerung 21 als dem feststehenden Teil 16 der Kraftfahrzeugklimaanlage angeordnet. Das Reibelement 5 weist dabei im zweiten Ausführungsbeispiel eine gleiche oder ähnliche Geometrie wie das Reibelement 5 im ersten Ausführungsbeispiel auf oder kann eine größere Ausdehnung in tangentialer Richtung bezüglich einer Rotationsachse 24 der Luftklappe 2 aufweisen. Bei der größeren Ausdehnung in tangentialer Richtung ist das Reibelement 5 dabei ein teilweise ausgebildeter Ring.

Insgesamt betrachtet sind mit der erfindungsgemäßen Kraftfahrzeugklimaanlage 7 wesentliche Vorteile verbunden. Unkontrollierte Bewegungen oder Schwingungen bzw. Vibrationen der Luftklappe 2, beispielsweise aufgrund einer Luftströmung in dem Luftkanal 18, werden von dem Reibelement 5 aufgrund der Reibungskraft verhindert. Dadurch kann die Geräuschentwicklung der Kraftfahrzeugklimaanlage 7 wesentlich reduziert werden.

### Bezugszeichenliste

- 1: Luftsteuerorgan
- 2: Luftklappe
- 3: Achse der Luftklappe
- 4: Welle der Luftklappe
- 5: Reibelement
- 6: Bewegungsteil der Kraftfahrzeugklimaanlage
- 7: Kraftfahrzeugklimaanlage
- 8: Gebläse
- 9: Gehäuse
- 10: Bodenwandung
- 11: Wandung
- 12: Austrittsöffnung
- 13: Filter
- 14: Kältemittelverdampfer
- 15: Elektrische Heizeinrichtung
- 16: feststehender Teil der Kraftfahrzeugklimaanlage
- 17: konvexe Oberfläche des Reibelementes
- 18: Luftkanal
- 19: Oberfläche
- 20: Lagerung
- 21: Gleitlagerung
- 22: Steueröffnung
- 23: Spalt
- 24: Rotationsachse

## Patentansprüche

1. Kraftfahrzeugklimaanlage (7), umfassend
- ein Gehäuse (9),
- wenigstens einen Luftkanal (18) zum Durchleiten von Luft,
- wenigstens ein bewegbares Luftsteuerorgan (1) zum Steuern der durch den wenigstens einen Luftkanal (18) leitbaren Luftmenge,
- vorzugsweise wenigstens einen Aktuator zum kontrollierten Bewegen des wenigstens einen Luftsteuerorganes (1),
- vorzugsweise ein mechanisches System zur mechanischen Verbindung des wenigstens einen Aktuators mit dem wenigstens einen Luftsteuerorgan (1), wobei die Kraftfahrzeugklimaanlage (7) mit wenigstens einem Reibelement (5), insbesondere zur Erzeugung einer Reibungskraft zwischen einem Bewegungsteil (6) und einem feststehenden Teil (16) der Kraftfahrzeugklimaanlage (7), versehen ist, um Schwingungen und/oder unkontrollierte Bewegungen des wenigstens einen Luftsteuerorganes (1) zu verhindern oder zu reduzieren, **dadurch gekennzeichnet, dass** das wenigstens eine Reibelement (5) wenigstens teilweise, insbesondere vollständig, aus Gummi und/oder Schaumstoff besteht.

2. Kraftfahrzeugklimaanlage nach Anspruch 1, **dadurch gekennzeichnet, dass** das wenigstens eine Luftsteuerorgan (1) und vorzugsweise das mechanische System das Bewegungsteil (6) der Kraftfahrzeugklimaanlage (7) darstellen und vorzugsweise das wenigstens eine Reibelement (5) zwischen dem Bewegungsteil (6) und dem feststehenden Teil (16) der Kraftfahrzeugklimaanlage (7) angeordnet ist.

3. Kraftfahrzeugklimaanlage nach Anspruch 1 oder 2, **dadurch gekennzeichnet, dass** das wenigstens eine Reibelement (5) an dem mechanischen System und/oder dem wenigstens einen Luftsteuerorgan (1), insbesondere einer Achse (3) oder Welle (4) des wenigstens einen Luftsteuerorganes (1, 6), angeordnet ist, so dass das wenigstens eine Reibelement (5) Bewegungen des mechanischen Systems und/oder des wenigstens einen Luftsteuerorganes (1) mit ausführt und/oder das wenigstens eine Reibelement (5) an dem feststehenden Teil (16) der Kraftfahrzeugklimaanlage (7) angeordnet ist.

4. Kraftfahrzeugklimaanlage nach einem oder mehreren der vorhergehenden Ansprüche, **dadurch gekennzeichnet, dass** die Reibungskraft zur Verhinderung oder Reduzierung von Schwingungen und/oder unkontrollierten Bewegungen des wenigstens einen Luftsteuerorganes (1) erzeugbar ist aufgrund einer Relativbewegung zwischen dem sich mit bewegenden wenigstens einen Reibelement (5) und dem feststehenden Teil (16) der Kraftfahrzeugklimaanlage (7) und/oder die Reibungskraft zur Verhinderung oder Reduzierung von Schwingungen und/oder unkontrollierten Bewegungen des wenigstens einen Luftsteuerorganes (1) erzeugbar ist aufgrund einer Relativbewegung zwischen dem feststehenden wenigstens einen Reibelement (5) und dem sich bewegenden wenigstens eine Luftsteuerorgan (1) und vorzugsweise dem sich bewegenden mechanischen System der Kraftfahrzeugklimaanlage.

5. Kraftfahrzeugklimaanlage nach einem oder mehreren der vorhergehenden Ansprüche, **dadurch gekennzeichnet, dass** das wenigstens eine Reibelement (5) elastisch ist und/oder das wenigstens eine Reibelement (5) ausschließlich dazu dient, Schwingungen und/oder unkontrollierte Bewegungen des wenigstens einen Luftsteuerorganes (1) mittels Reibungskraft zu verhindern oder zu reduzieren.

6. Kraftfahrzeugklimaanlage nach einem oder mehreren der vorhergehenden Ansprüche, **dadurch gekennzeichnet, dass** das wenigstens eine Reibelement (5) eine konvexe Oberfläche aufweist.

7. Kraftfahrzeugklimaanlage nach Anspruch 6, **dadurch gekennzeichnet, dass** an der konvexen Oberfläche des wenigstens einen Reibelementes (5) die Relativbewegung ausführbar ist zur Erzeugung der Reibungskraft.

8. Kraftfahrzeugklimaanlage nach einem oder mehreren der vorhergehenden Ansprüche, **dadurch gekennzeichnet, dass** der feststehende Teil (16) der Kraftfahrzeugklimaanlage (7) ein Gehäuse (9) und/oder eine Wandung und/oder eine Lagerung, insbesondere eine Gleitlagerung, für das mechanische System umfasst und/oder das wenigstens eine Luftsteuerorgan (1) eine Luftklappe (2) oder ein Schirm oder ein Rollband ist. und/oder das wenigstens eine mechanische System eine Welle und/oder einen Hebel und/oder einen Kurbeltrieb und/oder einen Spindeltrieb und/oder ein Getriebe umfasst und/oder der Aktuator ein Elektromotor oder ein Aktuator mit einer Formgedächtnislegierung oder ein Piezoaktuator ist.

## Claims

1. A vehicle air-conditioning system (7), comprising
- a housing (9),
- at least one air duct (18) for conducting air,
- at least one movable air control member (1) for controlling the amount of air which can be conducted through the at least one air duct (18),
- preferably at least one actuator for controllably moving the at least one air control member (1),
- preferably a mechanical system for the mechanical connection of the at least one actuator to the at least one air control member (1), wherein the vehicle air-conditioning system (7) is provided with at least one friction element (5), in particular to produce a friction force between a moving part (6) and a fixed part (16) of the vehicle air-conditioning system (7) in order to prevent or to reduce vibrations and/or uncontrolled movements of the at least one air control member (1), **characterised in that** the at least one friction element (5) is made at least partially, in particular completely, of rubber and/or foam.

2. The vehicle air-conditioning system according to claim 1, **characterised in that** the at least one air control member (1) and preferably the mechanical system constitute the moving part (6) of the vehicle air-conditioning system (7) and preferably the at least one friction element (5) is arranged between the moving part (6) and the fixed part (16) of the vehicle air-conditioning system (7).

3. The vehicle air-conditioning system according to claim 1 or 2, **characterised in that** the at least one friction element (5) is arranged on the mechanical system and/or the at least one air control member(1), in particular an axis (3) or a shaft (4) of the at least one air control member (1, 6), so that the at least one friction element (5) also performs movements of the mechanical system and/or the at least one air control member (1) and/or the at least one friction element (5) is arranged on the fixed part (16) of the vehicle air-conditioning system (7).

4. The vehicle air-conditioning system according to one or more of the preceding claims, **characterised in that** the friction force for preventing or reducing vibrations and/or uncontrolled movements of the at least one air control member (1) can be generated due to relative movement between the at least one moving friction element (5) and the fixed part (16) of the vehicle air-conditioning system (7) and/or the friction force for preventing or reducing vibrations and/or uncontrolled movements of the at least one air control member (1) can be generated due to relative movement between the at least one fixed friction element (5) and the at least one moving air control member (1) and preferably the moving mechanical system of the vehicle air-conditioning system.

5. The vehicle air-conditioning system according to one or more of the preceding claims, **characterised in that** the at least one friction element (5) is elastic and/or the at least one friction element (5) only serves to prevent or to reduce vibrations and/or uncontrolled movements of the at least one air control member (1) by means of friction force.

6. The vehicle air-conditioning system according to one or more of the preceding claims, **characterised in that** the at least one friction element (5) has a convex surface.

7. The vehicle air-conditioning system according to claim 6, **characterised in that** the relative movement for generating the friction force can be performed on the convex surface of the at least one friction element (5).

8. The vehicle air-conditioning system according to one or more of the preceding claims, **characterised in that** the fixed part (16) of the vehicle air-conditioning system (7) comprises a housing (9) and/or a wall and/or a bearing, in particular a plain bearing, for the mechanical system and/or the at least one air control member (1) is an air flap (2) or a screen or a roller belt and/or the at least one mechanical system comprises a shaft and/or a lever and/or a crank drive and/or a spindle drive and/or a gearing and/or the actuator is an electric motor or an actuator of a shape memory alloy or a piezo actuator.

## Revendications

1. Système de climatisation d'un véhicule automobile (7), comprenant
- un carter (9),
- au moins un conduit d'air (18) servant à la circulation d'air,
- au moins un organe de régulation d'air (1) pouvant être déplacé et servant à réguler la quantité d'air pouvant être dirigée à travers le conduit d'air (18) au moins au nombre de un,
- de préférence au moins un actionneur servant au déplacement contrôlé de l'organe de régulation d'air (1) au moins au nombre de un,
- de préférence un système mécanique servant à assurer la liaison mécanique de l'actionneur au moins au nombre de un, avec l'organe de régulation d'air (1) au moins au nombre de un, où le système de climatisation d'un véhicule automobile (7) est doté d'au moins un élément de frottement (5), en particulier servant à la production d'une force de frottement entre une partie en mouvement (6) et une partie fixe (16) du système de climatisation du véhicule automobile (7), pour empêcher ou pour réduire des vibrations et / ou des mouvements incontrôlés de l'organe de régulation d'air (1) au moins au nombre de un, **caractérisé en ce que** l'élément de frottement (5) au moins au nombre de un se compose au moins en partie, en particulier en totalité, de caoutchouc et / ou de mousse.

2. Système de climatisation d'un véhicule automobile selon la revendication 1, **caractérisé en ce que** l'organe de régulation d'air (1) au moins au nombre de un et de préférence le système mécanique représentent la partie en mouvement (6) du système de climatisation du véhicule automobile (7), et de préférence l'élément de frottement (5) au moins au nombre de un est disposé entre la partie en mouvement (6) et la partie fixe (16) du système de climatisation du véhicule automobile (7).

3. Système de climatisation d'un véhicule automobile selon la revendication 1 ou 2, **caractérisé en ce que** l'élément de frottement (5) au moins au nombre de un est disposé sur le système mécanique et / ou sur l'organe de régulation d'air (1) au moins au nombre de un, en particulier sur un axe (3) ou sur un arbre (4) de l'organe de régulation d'air (1, 6) au moins au nombre de un, de sorte que l'élément de frottement (5) au moins au nombre de un effectue des mouvements du système mécanique et / ou de l'organe de régulation d'air (1) au moins au nombre de un, en même temps qu'eux, et / ou l'élément de frottement (5) au moins au nombre de un est disposé sur la partie fixe (16) du système de climatisation du véhicule automobile (7).

4. Système de climatisation d'un véhicule automobile selon l'une quelconque ou plusieurs des revendications précédentes, **caractérisé en ce que** la force de frottement servant à empêcher ou à réduire des vibrations et / ou des mouvements incontrôlés de l'organe de régulation d'air (1) au moins au nombre de un peut être générée sous l'effet d'un mouvement relatif se produisant entre l'élément de frottement (5) au moins au nombre de un, qui se déplace, et la partie (16) du système de climatisation du véhicule automobile (7), qui est fixe, et / ou la force de frottement servant à empêcher ou à réduire des vibrations et / ou des mouvements incontrôlés de l'organe de régulation d'air (1) au moins au nombre de un peut être générée sous l'effet d'un mouvement relatif se produisant entre l'élément de frottement (5) au moins au nombre de un, qui est fixe, et l'organe de régulation d'air (1) au moins au nombre de un, qui se déplace et, de préférence, le système mécanique - qui se déplace - du système de climatisation du véhicule automobile.

5. Système de climatisation d'un véhicule automobile selon l'une quelconque ou plusieurs des revendications précédentes, **caractérisé en ce que** l'élément de frottement (5) au moins au nombre de un est élastique et / ou l'élément de frottement (5) au moins au nombre de un sert exclusivement à empêcher ou à réduire, au moyen de la force de frottement, des vibrations et / ou des mouvements incontrôlés de l'organe de régulation d'air (1) au moins au nombre de un.

6. Système de climatisation d'un véhicule automobile selon l'une quelconque ou plusieurs des revendications précédentes, **caractérisé en ce que** l'élément de frottement (5) au moins au nombre de un présente une surface convexe.

7. Système de climatisation d'un véhicule automobile selon la revendication 6, **caractérisé en ce que** le mouvement relatif, qui peut être effectué sur la surface convexe de l'élément de frottement (5) au moins au nombre de un, sert à la production de la force de frottement.

8. Système de climatisation d'un véhicule automobile selon l'une quelconque ou plusieurs des revendications précédentes, **caractérisé en ce que** la partie fixe (16) du système de climatisation du véhicule automobile (7) comprend, pour le système mécanique, un carter (9) et / ou une paroi et / ou une fixation, en particulier un palier lisse, et / ou l'organe de régulation d'air (1) au moins au nombre de un est un volet d'air (2) ou un écran ou une bande enroulée, et / ou le système mécanique au moins au nombre de un comprend un arbre et / ou un levier et / ou une commande à manivelle et / ou une commande à vis et / ou un mécanisme, et / ou l'actionneur est un moteur électrique ou un actionneur comprenant un alliage à mémoire de forme, ou bien est un actionneur piézoélectrique.
